# EUROPEAN PATENT APPLICATION

(11) **EP 3 202 551 A1**
(43) Date of publication of application: **09.08.2017**
(21) Application number: 14902939.9
(22) Date of filing: 05.12.2014
(51) Int. Cl.: B29C 51/10, B29C 53/04, C08J 5/18

(54) **PRECURSOR OF SHEET FOR VACUUM MOLDING USE, SHEET FOR VACUUM MOLDING USE, METHOD FOR PRODUCING SAID SHEET, AND METHOD FOR PRODUCING MOLDED ARTICLE**

(30) Priority: 29.09.2014 JP 2014198488
(71) Applicant: TBM Co., Ltd., Chuo-ku, Tokyo 1040061 (JP)
(72) Inventor: SUMI, Yuichiro, Tokyo 168-0064 (JP)
(74) Representative: Papula Oy
(86) International application number: PCT/JP2014/082308
(87) International publication number: WO 2016/051612

(57) **Abstract**

Provided are: a sheet for vacuum molding use, which can be molded into a sheet readily and can exhibit high followability to a mold during vacuum molding, and into which an inorganic substance powder is highly filled; a precursor of a sheet for vacuum molding use, which can be used for the production of a sheet for vacuum molding use; a method for producing a sheet for vacuum molding use; and a method for producing a molded article using a sheet for vacuum molding use. A sheet for vacuum molding use, which comprises a thermoplastic resin, an inorganic substance powder and an internal lubricant, wherein the thermoplastic resin and the inorganic substance powder are contained at a ratio of 55:45 by mass to 30:70 by mass. It is preferred that the sheet for vacuum molding use has an elongation percentage of 20% or more at 120°C in each of a direction orthogonal to the direction of the delivery of the sheet (i.e., a TD) and the direction of the delivery of the sheet (i.e., an MD) during the production of the sheet as measured in accordance with JIS K7127-1999.

## Description

### TECHNICAL FIELD

The present invention relates to a precursor for a sheet for vacuum molding, a sheet for vacuum molding and a method for producing the same, and a method for producing a molded article.

### BACKGROUND ART

Vacuum molding is a molding method in which a thermoplastic resin in a sheet or plate form is softened by applying heat and held down on a convex or concave mold, and the state close to the vacuum is created by taking air between the thermoplastic resin and the mold from underneath and the thermoplastic resin is allowed to adhere closely to the mold to produce a desired form. Vacuum molding has advantages that costs for producing dies are low, prototypes can be produced for a short period of time and costs for trial manufacture are also low, large size and thin wall molding is easy, various forms can be taken, a partial change in design is easy, and small lot production is available, and is used to produce, for example, parts trays, carry trays, resin covers, food trays, food packs, spoilers with a simple form and motorcycle cowlings, and the like. In contrast, vacuum molding has restrictions on the forms of applicable products, for example vacuum molding can be applied basically only to one side due to characteristics of the molding method, and further has had problems in that details are not easily produced when complicated forms are taken, and it is difficult to reproduce an equal thickness.

For molded articles by the above vacuum molding, sheets of thermoplastic resins such as polyethylene terephthalate (PET), polyvinyl chloride (PVC), polyethylene (PE), polypropylene (PP) and polystyrene (PS) are widely applied; however, it is required to deal with environmental issues, for example depletion of petroleum resources and disposal of waste in recent years in the case of molded articles by the above vacuum molding (Patent Documents 1 to 3).

In order to deal with the above problems, it is preferred that the proportion of thermoplastic resin used for a sheet for vacuum molding be reduced. The amount of thermoplastic resin used can be reduced by mixing an inorganic substance powder in a sheet for vacuum molding; however, when the inorganic substance powder content increases, the fluidity of a kneaded mixture of the thermoplastic resin and the inorganic substance powder is generally reduced, and thus it has been difficult to mold a kneaded mixture having an increased content of inorganic substance powder into a sheet with uniform and good physical properties.

Furthermore, when a sheet for vacuum molding in which an inorganic substance powder is highly filled is molded by a vacuum molding method, a problem develops in that the details of a mold cannot be reproduced due to a lack of mold-followability. Therefore, the inorganic substance powder content of a sheet for vacuum molding has not been able to be increased until now.
Patent Document 1: Japanese Unexamined Patent Application, Publication No. 2001-018286
Patent Document 2: Japanese Unexamined Patent Application, Publication No. 2004-122777
Patent Document 3: Japanese Unexamined Patent Application, Publication No. 2007-246624

### DISCLOSURE OF THE INVENTION

### Problems to be Solved by the Invention

The present invention was made in view of the above circumstances, and an object thereof is to provide a sheet for vacuum molding, which is molded into a sheet readily and has high mold-followability during vacuum molding, and in which an inorganic substance powder is highly filled, a precursor for a sheet for vacuum molding for producing a sheet for vacuum molding, a method for producing a sheet for vacuum molding, and a method for producing a molded article using a sheet for vacuum molding.

### Means for Solving the Problems

The present inventors found that a kneaded mixture which contains a thermoplastic resin, an inorganic substance powder and an internal lubricant had excellent moldability even when the inorganic substance powder was highly filled, and thus a sheet could be produced easily, and further the mold-followability of the sheet during vacuum molding increased, thereby completing the present invention. More specifically, the present invention provides the following.

A first aspect of the present invention is a sheet for vacuum molding, which contains a thermoplastic resin, an inorganic substance powder and an internal lubricant, wherein the thermoplastic resin and the inorganic substance powder are contained at a mass ratio of 55 : 45 to 30 : 70.

A second aspect of the present invention is a precursor for a sheet for vacuum molding, comprising a kneaded mixture which contains a thermoplastic resin, an inorganic substance powder and an internal lubricant, wherein the thermoplastic resin and the inorganic substance powder are contained at a mass ratio of 55 : 45 to 30 : 70.

A third aspect of the present invention is a method for producing a sheet for vacuum molding, comprising the molding step of obtaining a molded sheet by molding a kneaded mixture which contains a thermoplastic resin, an inorganic substance powder and an internal lubricant, wherein the thermoplastic resin and the inorganic substance powder are contained at a mass ratio of 55 : 45 to 30 : 70, into a sheet form.

A fourth aspect of the present invention is a method for producing a molded article, in which the sheet for vacuum molding of the first aspect of the present invention is shaped by vacuum molding processing.

### Effects of the Invention

According to the present invention, there is provided a sheet for vacuum molding, which is molded into a sheet readily and has high mold-followability during vacuum molding, and in which an inorganic substance powder is highly filled, a precursor for a sheet for vacuum molding for producing a sheet for vacuum molding, a method for producing a sheet for vacuum molding, and a method for producing a molded article using a sheet for vacuum molding.

### BRIEF DESCRIPTION OF THE DRAWINGS

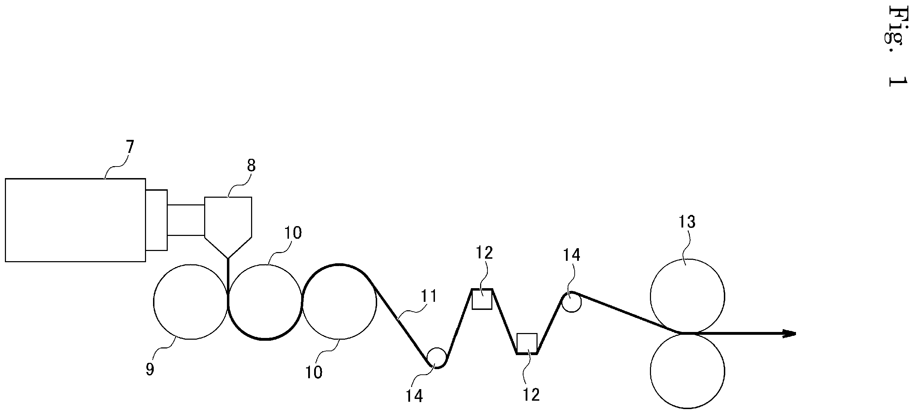

Fig. 1 is a diagram schematically showing an aspect of the method for producing a sheet for vacuum molding of the present invention.

### PREFERRED MODE FOR CARRYING OUT THE INVENTION

Embodiments of the present invention will now be described in detail. It should be noted however that the present invention is not limited to the following embodiments, and can be carried out with suitable modifications within the scope of the purposes of the present invention.

The sheet for vacuum molding in the first aspect of the present invention is characterized by containing a thermoplastic resin, an inorganic substance powder and an internal lubricant, wherein the thermoplastic resin and the inorganic substance powder are contained at a mass ratio of 55 : 45 to 30 : 70.

As the thermoplastic resin to be used, either a crystalline thermoplastic resin or a non-crystalline thermoplastic resin may be used. For example, one or more thermoplastic resins selected from the group consisting of olefin resins such as polyethylene and polypropylene, vinyl resins such as polyvinyl chloride and polystyrene, and polyester resins such as polyethylene terephthalate and polybutylene terephthalate can be used. Particularly, crystalline thermoplastic resins are preferred, and among these, an olefin resin is preferably selected.

Furthermore, a high-density polyethylene resin is preferably used in terms of the ease of producing a sheet. In addition, a hard resin such as polystyrene can be also used in combination with the above polyethylene resin to improve the toughness of a sheet.

As the inorganic substance powder used in the present invention, inorganic substance powders which are added as a filler to a conventional plastic product can be used without particular limitations. Examples of such filler can include metal compounds such as metal oxide, metal hydroxide, metal carbonate and layer compounds. Among these, it is preferred to use calcium carbonate, titanium oxide, silica, clay, talc, kaolin, aluminum hydroxide and the like. In addition, two or more of these can be selected and mixed to use. The surface of these inorganic substance powders may be modified in advance in accordance with a conventional method to improve dispersibility into a sheet.

The average particle diameter of inorganic substance powder used in the present invention is preferably 0.5 µm or more, and further preferably 2 µm or more. The average particle diameter of inorganic substance powder is also preferably 20 µm or less, and further preferably 15 µm or less. When the particles of inorganic substance powder are too fine, viscosity significantly increases by kneading with a thermoplastic resin, and the production of a sheet tends to be difficult. Since there are not problems in the production of sheets, it is preferred that the average particle diameter of the above inorganic substance powder be 0.5 µm or more. In contrast, when the particles of inorganic substance powder are large, the surface of a sheet becomes coarse to spoil the appearance of a molded article in some cases. It is preferred that the average particle diameter of the above inorganic substance powder be 20 µm or less from a viewpoint of the appearance of a molded article. Furthermore, in order not to spoil the appearance of a molded article by preventing large particles in an inorganic substance powder from separating from the surface of a sheet, it is preferred that coarse particles with a particle diameter of 50 µm or more not be contained within the range of particle diameter distribution thereof.

The particle diameter of the inorganic substance powder in the present invention is a numerical value measured by an air permeability method.

In the sheet for vacuum molding of the present invention, the ratio of the above thermoplastic resin to the above inorganic substance powder is preferably 55 : 45 by mass ratio, i.e. 55/45 or less, and further preferably 50 : 50, i.e. 50/50 or less. In addition, the above mass ratio is preferably 30 : 70, i.e. 30/70 or more, and further preferably 40 : 60, i.e. 40/60 or more. It is preferred that the percentage of inorganic substance added be higher since environmental burdens are reduced. In a range in which the percentage of inorganic substance powder added is high, however, as the mass ratio of thermoplastic resin to inorganic substance powder decreases, the strength of a molded article obtained from a sheet for vacuum molding tends to decrease. For example, it is preferred that the mass ratio of thermoplastic resin and inorganic substance powder be 30/70 or more because the required strength of a molded article can be maintained. In addition, when, as the mass ratio of thermoplastic resin and inorganic substance powder decreases, the percentage of inorganic substance powder increases, the amount of internal lubricant required must increase. When the amount increases as described, problems tend to easily occur, for example stickiness of the surface of a sheet for vacuum molding. Therefore, it is preferred that the mass ratio of thermoplastic resin and inorganic substance powder be 30/70 or more because the sheet moldability and mold-followability during vacuum molding can be sufficiently secured without excessively increasing the internal lubricant content.

In the case of a conventional sheet not containing an internal lubricant, it has been difficult to increase the inorganic substance powder content to above 60/40 by mass ratio described above. The present inventors found that by filling an inorganic substance powder together with an internal lubricant in a thermoplastic resin, the inorganic substance powder could be highly filled in a sheet, and simultaneously the mold-followability of a sheet during vacuum molding could increase, and further this followability could be decided by an elongation rate measured at a high temperature, thereby completing the present invention. It should be noted that the elongation rate at a high temperature is an elongation rate measured in accordance with JIS K7127-1999, and the temperature is 120°C in the present application.

As long as the internal lubricant of the present invention is a compound which remains in the inside of a film and can reduce friction of an inorganic substance powder, the compound can be used without particular limitations. Examples thereof can include hydrocarbon-based waxes such as polyethylene wax, paraffin wax and paraffin liquid; higher alcohols such as stearyl alcohol, cetyl alcohol and coconut alcohol; fatty acids such as stearic acid and hydroxystearic acid; metallic soaps such as calcium stearate, zinc stearate, magnesium stearate and lead stearate; aliphatic amides such as lauric acid amide, behenic acid amide, oleic acid amide and ethylenebis stearic acid amide; aliphatic esters such as behenic acid monoglyceride, oleic acid monoglyceride, stearic acid monoglyceride, butyl stearate and hydroxystearic acid triglyceride, and the like. Among these, it is preferred to contain one or more selected from the group consisting of fatty acids, metallic soaps, aliphatic amides and aliphatic esters of alcohols in terms of molding a sheet with a proper thickness.

The sheet for vacuum molding of the present invention contains the above internal lubricant preferably in an amount of 0.5 parts by mass or more to a total of 100 parts by mass of the thermoplastic resin and the above inorganic substance powder, and further preferably 2 parts by mass or more. Conversely, the amount of the above internal lubricant contained in a sheet for vacuum molding is preferably 5.0 parts by mass or less, and further preferably 4 parts by mass or less. A lower content of internal lubricant reduces sheet moldability, and the inorganic substance powder content tends not to be able to increase. It is preferred that the amount of internal lubricant contained in a sheet for vacuum molding be 0.5 parts by mass or more to a total of 100 parts by mass of thermoplastic resin and inorganic substance powder because the inorganic substance powder content can increase and the amount of thermoplastic resin used can be reduced. In contrast, a higher content of internal lubricant tends to easily cause the segregation of internal lubricant on the sheet surface. It is preferred that the amount of internal lubricant be 5.0 parts by mass or less to a total of 100 parts by mass of thermoplastic resin and inorganic substance powder because, for example, stickiness on the surface of a sheet for vacuum molding can be prevented.

When the inorganic substance powder content is raised, conventional sheets for vacuum molding become hard and fragile under normal production conditions to make handling properties bad, and further processing by a vacuum molding method has been impossible or extremely difficult. Although an inorganic substance powder is highly filled, the sheet for vacuum molding of the present invention can be molded into a sheet by adding an internal lubricant together with the inorganic substance powder.

A sheet for vacuum molding is also required to have die-followability during vacuum molding. In order to mold, for example, containers, it is preferred to be able to form containers with various depths from a sheet for vacuum molding. Among drawing processing, processing to make the depth of a cylindrical container longer than the diameter of the cylinder, or the depth of a square tube longer than the size of the edge is called "deep drawing processing." In order to deal with such deep drawing processing, the ease of deformation is an important element to select a sheet for vacuum molding.

As a result of investigation of the limitations of deep drawing within which vacuum molding can be carried out to a sheet in which an inorganic substance powder is highly filled, the present inventors found that, when the elongation rate at 120°C is 330% in the direction of transfer of a sheet (MD direction) and 120% in the direction orthogonal to the direction of transfer (TD direction), deep drawing with a depth of 70 to 80 mm, which is thought to be a general limitation of the depth of sheet molding, could be carried out.

The present inventors found that the depth in which vacuum molding can be carried out was almost half of the numerical value of the elongation rate at 120°C. For example, because there are even small trays with a depth of 10 mm or less for confectionary, in the sheet for vacuum molding of the present invention, the elongation rate at 120°C is adequately 20% or more in each of the MD direction and TD direction, which elongation rate is measured in accordance with JIS K7127-1999, and further preferably 70% or more. Particularly, when the elongation rate at 120°C of a sheet for vacuum molding is 70% or more, the mold-followability of the sheet during vacuum molding is further good, more complex forms can be taken, and further tolerance in processing conditions can increase.

In addition to the thermoplastic resin, inorganic substance powder and internal lubricant mentioned above, one or more auxiliary agents selected from for example antioxidants, UV absorbers, coloring pigments, antistatic agents and flame retardants can be added to the sheet for vacuum molding of the present invention without departing from purposes.

As the antioxidants, for example, phosphorus-based antioxidants, phenol-based antioxidants, and pentaerythritol-based antioxidants can be used. Phosphorus-based, more specifically phosphorus-based antioxidant stabilizers such as phosphorous acid esters and phosphoric acid esters are preferably used. Examples of phosphorous acid esters include phosphorous acid triesters, diesters and monoesters such as triphenyl phosphite, trisnonylphenyl phosphite, and tris(2,4-di-tert-butylphenyl)phosphite, and the like.

Phosphoric acid esters include trimethyl phosphate, triethyl phosphate, tributyl phosphate, trioctyl phosphate, triphenyl phosphate, tricresyl phosphate, tris(nonylphenyl)phosphate, 2-ethylphenyldiphenyl phosphate and the like. These phosphorus-based antioxidants can be used alone, or two or more of these may be used in combination.

Examples of phenol-based antioxidants are α-tocopherol, butylhydroxytoluene, sinapyl alcohol, vitamin E, n-octadecyl-3-(3,5-di-tert-butyl-4-hydroxyphenyl)propionate, 2-tert-butyl-6-(3'-tert-butyl-5'-methyl-2'-hydroxybenzyl)-4-methylphenyl acrylate, 2,6-di-tert-butyl-4-(N,N-dimethyl aminomethyl)phenol, 3,5-di-tert-butyl-4-hydroxybenzyl phosphonate diethyl ester, and tetrakis[3-(3,5-di-tert-butyl-4-hydroxyphenyl)propionyloxymethyl]methane and the like, and these can be used alone or two or more of these can be used in combination.

The UV absorbers can include benzotriazole compounds, triazine compounds, benzophenone compounds and the like, and the coloring pigments can include carbon black, titanium dioxide, varieties of organic dyes, metallic pigments and the like.

The average thickness of the sheet for vacuum molding of the present invention is not particularly limited, and can be optionally selected depending on the forms and uses of molded articles to be produced. However, in terms of the ease of processing, the average thickness of a sheet is preferably 0.15 mm or more, more preferably 0.20 mm or more, and the average thickness of a sheet is preferably 4 mm or less, and more preferably 1 mm or less. A thinner average thickness of a sheet for vacuum molding tends to have an insufficient strength of a molded article obtained from the sheet for vacuum molding, and a thicker thickness tends to have insufficient sheet moldability and mold-followability. When the average thickness of a sheet for vacuum molding is thicker than 0.15 mm, the strength of a molded article can be kept, and when the average thickness is thinner than 4 mm, the mold-followability is raised and tolerance in vacuum molding processing is improved.

When exactly finding the average thickness of a sheet for vacuum molding in the present invention, thicknesses at inner 10 points obtained when a line segment which passes through the center in the direction of width of the sheet and extends perpendicularly to the direction of width is divided into 11 parts are measured with a dial gauge micrometer which can apply a constant pressure, and the average thickness is found by calculating an average of the obtained values.

The sheet for vacuum molding of the present invention can be produced using means such as calendaring, extrusion, inflation which has been conventionally used in many purposes. For example, a thermoplastic resin and an inorganic substance powder are directly put into a twin screw extruder and can be continuously kneaded and molded into a sheet state, or the two are put into a twin screw extruder and kneaded to produce a precursor for a sheet for vacuum molding such as pellets (an intermediate) first, and this precursor can be then put into, for example, another molding machine and molded into a sheet state.

The second aspect of the present invention, a precursor for a sheet for vacuum molding, comprises a kneaded mixture which contains a thermoplastic resin, an inorganic substance powder and an internal lubricant, wherein the thermoplastic resin and the inorganic substance powder are contained at a mass ratio of 55 : 45 to 30 : 70, and the form thereof is not particularly limited. For example, various forms such as pellets, flakes and beads can be taken.

Among the above methods, a production method by melt extrusion molding is preferred considering the productivity, the mechanical characteristics of a sheet for vacuum molding to be obtained, the ease of control of film thickness, the applicability to various resins, and environmental burdens and the like. Among these, it is preferred that a sheet for vacuum molding be produced by extrusion molding by a T-die method.

In the present invention, an untreated sheet produced using means such as calendaring, extrusion and inflation is called a molded sheet. The above molded sheet can be directly used as a sheet for vacuum molding, and in this case, the molded sheet and the sheet for vacuum molding are not different. Varieties of pretreatments such as printing, surface treatment, mechanical treatment, and lamination with another sheet may be carried out in advance to the above molded sheet to obtain a final product, a sheet for vacuum molding. Among these pretreatments, a plurality of optional treatments can be combined.

Among these, the surface treatment is to provide functionality to the surface of a sheet for vacuum molding, and can be carried out on both sides or one side depending on purposes. As the surface treatment, for example, hydrophilization, hydrophobization, and impartment of gas barrier properties, and further a large number of treatments are known, and among these, a method for providing a desired function to a sheet for vacuum molding can be suitably selected.

The present inventors further found that, by carrying out, as the mechanical treatment, a bending step described below to the above molded sheet, sufficient plasticity could be unexpectedly provided to a hard and fragile molded sheet and consequently tolerance in the conditions of the subsequent vacuum molding treatment could be improved.

In the present invention, a step in which a long solid object such as a bar, a plate or a beam is pressed against the surface of the above molded sheet so that the long direction thereof will cross the direction of transfer of the sheet (machine direction, MD direction) to bend the above molded sheet is provided. At this time, it is preferred to apply stress in a state in which the above molded sheet is bent and crooked in the abutment portion of the object to the molded sheet by relatively moving the above object and the above molded sheet.

In the present invention, bending processing is carried out to the front surface or the back surface of a molded sheet at least once. The bending processing can be carried out only on either the front surface or the back surface of a molded sheet, or both. However, it is required to pay attention to carrying out the bending processing only on one side of a molded sheet because a warp may be caused. In terms of the prevention of warps, it is preferred to carry out bending processing on both sides of a sheet.

When bending processing is carried out on both the front surface and the back surface of a sheet, bending processing can be continuously carried out on the front surface and the back surface, or bending processing is carried out on either the front surface or the back surface first, and bending processing can be then carried out on the surface on another side. In addition, a molded sheet is wound around a roll first to produce an original sheet roll, and bending processing can be then carried out to the original sheet roll, or the production and bending processing of a molded sheet can be continuously carried out.

A solid object in the present invention is brought into contact with molded sheets with various widths and pressed against the molded sheets at a fixed pressing pressure, and thus a long member is effectively used. Specifically, a member with a form such as a bar, a plate or a beam can be used. When a plate-shaped member is used, the member is used as a part to press ends. In order to apply unvaried pressure to places in the direction of width of a molded sheet, it is preferred that the length in the longitudinal direction of the solid object be much longer than that in the direction of width of a molded sheet (CD direction or TD direction), and arranged to cross the direction of transfer of the molded sheet. At this time, it is preferred that the longitudinal direction of the solid object be perpendicular or almost perpendicular to the direction of transfer of the molded sheet to apply unvaried pressing pressure to places in the direction of width of the molded sheet. Although the angle of the longitudinal direction of a solid object and the direction of transfer of a molded sheet is desirably perpendicular, the angle can be set to, for example, ±20 degrees of perpendicularity, preferably ±10 degrees and further preferably ±5 degrees.

The material of a solid object in the present invention is not particularly limited, and can be selected from well-known materials depending on purposes. Examples thereof can include, but not particularly limited to, variety of metallic materials such as SUS, and FRP and the like. In order to apply unvaried and uniform stress to the direction of width of a molded sheet, it is preferred to select a high rigid material as the material of a solid object.

The cross-sectional shape of the solid object in the present invention when viewed in the longitudinal direction is not particularly limited, and can adopt a circle, an ellipse, a triangle, a square, other polygons and the like. Using a triangle, a square or other polygons, bending processing can be carried out twice or more at the same time using one solid object.

Furthermore, it is desired that the cross-sectional shape of the abutment portion of the above solid object and molded sheet have an acute angle portion to a degree that the sheet is not broken, or have a R portion with a small curvature radius. A sufficient normal force (a force applied in the direction of thickness of a sheet) can be applied to a molded sheet by taking the form of the abutment portion of the solid object to the molded sheet as described above, and consequently the handling properties of the molded sheet and mold-followability are improved.

When bending process is carried out by drawing the molded sheet and simultaneously creating a bent state in the abutment portion with the solid object, the strength and breaking elongation of the molded sheet in which a filler is highly filled can be improved. This is thought that, when a strong normal force acts by the contact of the solid object in the process in which tensile stress acts in the inside of the molded sheet, normal stress acts in the direction of thickness of the molded sheet, and consequently shearing stress is generated in the direction of transfer of the sheet to relax the internal structure of the sheet.

In the bending processing of the present invention, the above solid object can be used alone, or two or more solid objects can be also used simultaneously.

Subsequently, a method for producing a sheet for vacuum molding involved in the present invention will now be described in more detail using Fig. 1. It should be noted however that the present invention is not limited thereto. Materials described above are put into a kneading extruder (7) equipped with a twin screw at a predetermined mixing ratio, and heated, melted and kneaded. Using a twin screw kneading extruder, a strong shearing force is allowed to act on the raw materials that are put into the kneading extruder, and components can be evenly dispersed. The materials that are put into the kneading extruder (7) to be in a molten state are supplied between the pressure roll (9) and the drawing roll (10) from a T-die (8) to form a sheet-shaped product, which is molded into a sheet form to form a molded sheet (11). The thickness of the molded sheet (11) can be optionally adjusted by adjusting the speed of both the pressure roll (9) and the drawing roll (10) and a gap between the both rolls.

A plurality of long solid objects (12) fixed on a flame, not shown, are provided in the front end of the drawing roll (10), and the molded sheet (11) is introduced therebetween. The winding roll (13) is provided in the front end of the solid object 12, and the molded sheet (11) is drawn in the direction shown with the arrow by the rotation of the winding roll (13). In the front and rear of the solid object (12), guide rollers (14) may be provided.

The long solid objects (12) are arranged so that the longitudinal direction thereof will cross the direction of transfer of the molded sheet (11), and the direction of motion of the molded sheet (11) is changed at an angle at which the molded sheet (11) is bent in a portion pressed by the solid objects (12). In Fig. 1, the cross-sectional shape of the solid objects (12) is a square, and the molded sheet (11) is bent in two angle portions of the solid object (12) to change the direction of motion thereof.

In Fig. 1, the normal force and shearing stress provided by the solid objects (12) acting on the molded sheet (11) are strengthened by tension acting on the molded sheet (11) based on a speed difference generated by increasing the rotation of the winding roll (13) more than the rotation of the drawing roll (10).

The rotation speeds of the drawing roll (10) and the winding roll (13) and the ratio thereof are preferably decided considering the strength of stress acting on the molded sheet (11). In addition, when a molded sheet drawn from the dies outlet of an extruder is directly subjected to bending processing, it is required to decide the speed of the winding roll depending on the drawing speed from the dies outlet.

As the range of differences between the rotation speeds of the drawing roll (10) and the winding roll (13), it is required to decide an optimum difference in rotation speed depending on a history of a molded sheet subjected to bending processing (conditions such as being right after extrusion molding and stored for a long period of time).

In Fig. 1, a molded sheet after the above bending step can be directly wound around a roll first to obtain an original sheet roll, or a molded sheet may be directly introduced into a well-known drawing machine, not shown, continuously and drawn to obtain an original sheet roll.

As described above, although the movement of an original molded sheet in the direction of transfer was mainly described, an aspect in which the molded sheet is fixed and a solid object is moved to apply tensile stress to the inside of the sheet is also available.

Various characteristics such as apparent specific gravity of a final product, a sheet for vacuum molding, may be adjusted to a desired range by drawing a molded sheet after the bending step in either the direction of transfer thereof or the direction of width, or both directions.

The sheet for vacuum molding of the present invention is shaped by vacuum molding depending on purposes of products. As the procedure of vacuum molding, first, the sheet for vacuum molding of the present invention is softened by heating with a heating means such as a heater, a molding die is then allowed to adhere to the sheet, subsequently, air between the molding die and the sheet is exhausted by a vacuum pump, the sheet is pressed against the molding die using atmospheric pressure, and directly cooled and solidified to shape, and finally a molded article is taken out from the molding die. Before molding, the sheet may be preliminarily heated to a temperature lower than that at which the sheet is deformed.

Examples of molded articles which can be produced from the sheet for vacuum molding of the present invention include cups, parts trays, carry trays, resin covers, food trays, food packs, pots, containers, bowls, spoilers with a simple form, and motorcycle cowlings, and the like, and the molded articles are not limited thereto and can be widely applied to various products.

### EXAMPLES

The present invention will now be described in more detail based on examples thereof. It should be noted however that the present invention is not limited thereto.

### [Example 1]

A high-density polyester resin with a melt mass flow rate (MFR) as described in Table 1 and calcium carbonate powder with an average particle diameter (d50) of 2.2 µm, which does not contain particles with a particle diameter of 45 µm or more, were adjusted to a mass ratio of 20 : 80, and magnesium stearate was further mixed to be 1, 3 and 5 mass% in both the raw materials. The above mixture was kneaded by a small twin screw kneading extruder equipped with a T die (manufactured by TECHNOVEL CORPORATION) at a preset temperature of 220°C and directly molded to produce a sheet (average thickness 200 µm).

A kneading load current passing through a small twin screw kneading extruder, and a resin pressure and a real temperature of resin during kneading were monitored. As the current, resin pressure and resin temperature during kneading increase, extrusion molding becomes difficult, the thickness of a molded sheet becomes uneven, and the strength and elongation rate also decrease, and thus the molded sheet does not have an adequate form as a sheet. Therefore, the difficulty of molding can be decided by the characteristics during kneading. The numerical values by experiments were summarized in Table 1.

**[Table 1]**

| | Conditions | | A | B | C |
|---|---|---|---|---|---|
| Resin Composition | Polyethylene (MFR:0.4)* | Parts | 2 | 2 | 2 |
| | Polyethylene (MFR:0.8)* | Parts | 18 | 18 | 18 |
| | Calcium Carbonate | Parts | 80 | 80 | 80 |
| | Magnesium Stearate | | 1 | 3 | 5 |
| Mixing Conditions | Current | A | 7.9 | 7.1 | 6.7 |
| | Resin Pressure | MPa | 20.3 | 16.8 | 14.9 |
| | Resin Temperature | ° C | 220 | 211 | 212 |

As can be seen from the above table, as the percentage of magnesium stearate added increased, extrusion molding became easy, and the uniformity of a molded sheet was improved. Even when the amount of calcium carbonate mixed is changed, this tendency is not changed at all.

### <Examples 2-4>

A high-density polyethylene resin with a melt mass flow rate of 0.8 g/10 min, and calcium carbonate powder used in Example 1 are adjusted to a predetermined mass ratio shown in Table 2, and magnesium stearate is mixed to be 3 parts by mass to a total of 100 parts by mass of both the raw materials. Using the above raw materials, molding was carried out by a direct method in the same manner as in Example 1. A molded sheet was drawn to a drawing roll (90°C) from the dies outlet, and then wound around a winding roll (30°C) immediately, and at this time, the rotation speeds of the drawing roll and winding roll were each set to 1.75 m/min. The average thickness of the obtained sheet for vacuum molding was 200 µm.

### <Comparative Examples 1-3>

A sheet was molded in the same manner as in Examples 2, 3 and 4 except that a high-density polyethylene resin and calcium carbonate powder were mixed at a mixing ratio in Table 2 to obtain a sheet for vacuum molding with an average thickness of 200 µm.

### [Evaluation of Strength and Elongation of Sheet]

From the sheets for vacuum molding obtained above, a strip test piece with a width of 15 mm having the direction of transfer (MD direction) when producing the sheet, and the direction orthogonal thereto (TD direction) as the long side was cut out, and a tensile test was carried out using a tensile tester equipped with a 1000 N load cell (manufactured by A&D Company, Limited) at 120°C under conditions of a tensile speed of 500 mm/min to measure strength and an elongation rate at the time when a film was broken.

### *: Melt Mass Flow Rate

In the description, the melt mass flow rate values mean values measured by JIS K7210:1999 "Plastics-Determination of the melt mass-flow rate (MFR) of thermoplastics" (test temperature 190°C).

**[Table 2]**

| Sample Number | | Comparative Example 1 | Comparative Example 2 | Example 2 | Example 3 | Example 4 | Comparative Example 3 |
|---|---|---|---|---|---|---|---|
| Mixing Ratio | High-density Polyethylene Resin | 100 | 65 | 50 | 35 | 30 | 20 |
| | Calcium Carbonate Powder | 0 | 35 | 50 | 65 | 70 | 80 |
| MD Direction | Tensile Strength (MPa) | 3.24 | 3.75 | 3.74 | 3.38 | 3.22 | 1.44 |
| | Elongation Rate | 510 | 553 | 300 | 110 | 140 | 64 |
| TD Direction | Tensile Strength (MPa) | 3.39 | 3.75 | 3.98 | 3.63 | 3.25 | 2.54 |
| | Elongation Rate | 250 | 150 | 96 | 31 | 20 | 8 |

According to Table 2, in Comparative Example 3 containing a high-density polyethylene resin and calcium carbonate powder at a mass ratio of 20 : 80, the elongation rate at 120°C in the TD direction was 8%. It was found that although a sheet for vacuum molding needed an elongation rate of 20% or more, the sheet for vacuum molding in Comparative Example 3 did not satisfy this.

In contrast, Examples 2 to 4, the implemented products of the present invention, all have an elongation rate of 20% or more. Particularly, Example 2 has an elongation rate at 120°C of 96% in both the MD and TD directions, and is estimated not to have problems in moldability such as mold-followability also in the case of vacuum molding of deep drawing. Comparative Examples 1 and 2 satisfy both moldability when producing a sheet and moldability when carrying out vacuum molding, however, the problems of the invention in the present application cannot be solved in respect of environmental burdens due to a high content rate of thermoplastic resin.

### <Example 5>

A high-density polyethylene resin (melt mass flow rate = 0.8 g/10 min) and calcium carbonate powder with an average particle diameter (d = 50) of 2.2 µm, which does not contain particles with a particle diameter of 45 µm or more, were adjusted to a mass ratio of 45 : 55, and magnesium stearate was further mixed to be 3 mass% in both the raw materials. The obtained mixture was mixed and kneaded using a parallel rotating twin screw extruder equipped with a T die and directly molded to produce a sheet for vacuum molding with a thickness of 400 µm.

This sheet (the elongation rates at 120°C are 330% in the MD direction and 120% in the TD direction) was molded by a vacuum molding machine manufactured by Seikosangyo Co., Ltd (Forming 480) at an atmosphere temperature of 200 to 230°C using a die for producing a 24 mm-depth container. The die was sufficiently reproduced in the molded product and the results were good.

### <Example 6>

A sheet for vacuum molding with a thickness of 400 µm produced under the same conditions as in Example 4 was molded by the same vacuum molding machine under the same conditions as in Example 4 using a 73 mm-depth test die. The die was sufficiently reproduced in the molded product and the results were good.

### EXPLANATION OF REFERENCE NUMERALS

- 11: Molded sheet
- 12: Solid object

## Claims

1. A sheet for vacuum molding, which contains a thermoplastic resin, an inorganic substance powder and an internal lubricant, wherein the thermoplastic resin and the inorganic substance powder are contained at a mass ratio of 55 : 45 to 30 : 70.

2. The sheet for vacuum molding according to claim 1, wherein the elongation rate at 120°C measured in accordance with JIS K7127-1999 is 20% or more in each of the direction orthogonal to the direction of transfer of the sheet (TD direction) and the direction of transfer (MD direction) when producing the sheet.

3. The sheet for vacuum molding according to claim 1 or 2, wherein the internal lubricant comprises one or more selected from the group consisting of fatty acids, metallic soaps, aliphatic amides and aliphatic esters of alcohols.

4. The sheet for vacuum molding according to any one of claims 1 to 3, wherein the internal lubricant is contained in an amount of 0.5 to 5.0 parts by mass to a total of 100 parts by mass of the thermoplastic resin and the inorganic substance powder.

5. A precursor for a sheet for vacuum molding, comprising a kneaded mixture which contains a thermoplastic resin, an inorganic substance powder and an internal lubricant, wherein the thermoplastic resin and the inorganic substance powder are contained at a mass ratio of 55 : 45 to 30 : 70.

6. A method for producing a sheet for vacuum molding, comprising the molding step of obtaining a molded sheet by molding a kneaded mixture which contains a thermoplastic resin, an inorganic substance powder and an internal lubricant, wherein the thermoplastic resin and the inorganic substance powder are contained at a mass ratio of 55 : 45 to 30 : 70 into a sheet form.

7. The method for producing a sheet for vacuum molding according to claim 6, wherein the kneaded mixture comprises the precursor for the sheet for vacuum molding according to claim 5.

8. The method for producing the sheet for vacuum molding according to claim 6, wherein the molding step comprises the step of extruding the kneaded mixture kneaded using a twin screw extruder.

9. The method for producing a sheet for vacuum molding according to any one of claims 6 to 8, having the bending step in which in the process of moving the molded sheet in the direction of transfer, a solid object is pressed against the surface of the molded sheet, and the molded sheet is put into a bent state in the abutment portion to generate stress which acts on the inside of the molded sheet.

10. The method for producing a sheet for vacuum molding according to any one of claims 6 to 9, wherein the kneaded mixture contains the internal lubricant in an amount of 0.5 to 5.0 parts by mass to a total of 100 parts by mass of the thermoplastic resin and the inorganic substance powder.

11. A method for producing a molded article, in which the sheet for vacuum molding according to any one of claims 1 to 4 is shaped by vacuum molding processing.

12. The method for producing a molded article according to claim 11, wherein the inorganic substance powder content to the thermoplastic resin (mass ratio) is not less than 50/50.
